# EUROPEAN PATENT SPECIFICATION

(11) **EP 2 333 666 B1**
(45) Date of publication and mention of the grant of the patent: **18.12.2013**
(21) Application number: 10777363.2
(22) Date of filing: 18.05.2010
(51) Int. Cl.: G06F 9/445, G06F 11/00

(54) **PATCHING METHOD AND PATCHING DEVICE UNDER MULTI-CORE ENVIRONMENT**
FLICKVERFAHREN UND FLICKVORRICHTUNG IN EINER MEHRKERNUMGEBUNG
PROCÉDÉ ET DISPOSITIF DE CORRECTION DE PROGRAMME DANS UN ENVIRONNEMENT MULTIC UR

(30) Priority: 18.05.2009 CN 200910145367
(43) Date of publication of application: 15.06.2011
(73) Proprietor: Huawei Technologies Co., Ltd., Shenzhen, Guangdong 518129 (CN)
(72) Inventor: YIN, Luoying, Longgang District 518129 Shenzhen (CN); YE, Peng, Longgang District 518129 Shenzhen (CN)
(74) Representative: Isarpatent
(86) International application number: PCT/CN2010/072865
(87) International publication number: WO 2010/133160

(56) References cited:
- CN-A- 1 423 456
- CN-A- 101 178 672
- CN-A- 101 178 672
- CN-A- 101 561 764
- "Appendix A" In: HENNESSY, John L.; PATTERSON, David A.: "Computer Architecture: A Quantitative Approach, 3rd Edition (Passage: Delay Slots)", 29 May 2002 (2002-05-29), Morgan Kaufmann, XP002660596, ISBN: 1558607242 pages A21-A26, * page A21, page A26 *

## Description

### FIELD OF THE INVENTION

The present invention relates to the field of communication technologies, and in particular, to a patching method and a patching device in a multi-core environment.

### BACKGROUND OF THE INVENTION

The multi-core technology has become the new trend of development of processor technology. At present, roadmaps of mainstream processor manufacturers are multi-core processors. For example, the XLR732 processor with a Microprocessor Without Interlocked Pipeline Stages (MIPS) architecture manufactured by RAZA Company has 8 cores, and each core includes 4 hardware threads (Virtual CPUs, that is, VCPUs), so that a total of 32 VCPUs exist; and the Cavium5860 processor with an MIPS architecture manufactured by OCETON Company has 16 cores, and each core includes 1 VCPU.

An operating system generally has two kinds of architectures on a multi-core processor hardware platform: One is the Symmetrical Multi-Processing (SMP) mode, and the other is the Asymmetrical Multi-Processing (AMP) mode. Just as the name implies: The multiple cores are equally treated under the SMP architecture, the operating system running on each core is the same, and the SMP runs only one operating system image to manage all the VCPUs; the multiple cores are differentially treated under the AMP architecture, an individual operating system image runs on each VCPU of the AMP, and the operating system images running on different VCPUs of the AMP are divided according to the tasks and are responsible for their duties. In the AMP mode, in order to save memory resources, virtual address spaces of code segments of operating system images of VCPUs with the same function are mapped to the same physical address space, so as to realize sharing of a code segment by multiple VCPUs.

Hotfix (collectively referred to as patch hereinafter) is a general requirement for telecommunication software, and is adopted to dynamically modify the program during system operation, for example, to perform system test or repair software defects without affecting the normal operation of services. The existing patching technology in a single-core environment is as follows: first, writing a new patch function into a source file, and compiling the source file into a target file; re-locating symbols in the target file with a patch maker by using an executable program file and a history patch file of an original function to be patched to generate a patch file, and loading the patch file into a system address space run by the original function to be patched through a loading tool; and finally, during the process that the patch is activated to become effective, a first instruction of the original function to be patched is modified into an unconditional jump instruction to jump to an address of the new patch function.

In a multi-core AMP shared code segment environment, for example, in all the MIPS CPUs, an instruction immediately following a jump instruction will be executed even if the jump instruction is successfully executed, and such an instruction is referred to as a delay slot instruction of the jump instruction. During patch activation, the first instruction of the original function to be patched needs to be modified into an unconditional jump instruction to jump to the address of the new patch function, and simultaneously, a second instruction of the original function to be patched, that is, the delay slot instruction of the jump instruction, needs to be modified into a no-operation instruction (NOP). That is, in the multi-core AMP shared code segment environment, patching operation needs to simultaneously modify two instructions, while in the multi-core AMP shared code segment environment, during the process that software on one VCPU is patched, if the first instruction of the original function to be patched has just been modified, and the other VCPUs which share the code segment of the VCPU just begin to execute a patch function, the first instruction of the patch function executed by the other VCPUs is of the new patch function, and the second instruction of the patch function executed by the other VCPUs is of the original function to be patched, thus causing software logical confusion, and resulting in errors.

Document D1 CN 101178672A discloses a method of polycaryon processor sharing code segment mend, which is more particularly that: the visiting right for the prearranged code mend area and the sharing code segment is opened and mend synchronization information is sent to the operation vCPU; whether all the operation vCPU finishes synchronization is checked, and mend operation is conducted if all synchronizations are finished. The invention also discloses a polycaryon processor sharing code segment mend device, which comprise a right control unit, a transmission unit and a control unit. Owning to the method of synchronization multi business vCPU, the invention resolves the reliability of polycaryon CPU mend operation and realizes the mend technology under the condition of polycaryon processor sharing code segment.

Document D2 A.2 The Major Hurdle of Pipelinging-Pipelne hazards discloses the delay slot problem typically found in pipelined processros.

Therefore, in the multi-core AMP shared code segment environment, patching software on one VCPU will influence other VCPUs that share the code segment with the VCPU. How to ensure the simultaneous effectiveness of patches of a group of VCPUs that share a code segment is a problem to be solved for the patching technology in the multi-core AMP shared code segment environment.

### SUMMARY OF THE INVENTION

The present invention is directed to a patching method and a patching device in a multi-core environment, so as to realize the simultaneous effectiveness of patches of all VCPUs which share a code segment when activating the patches in the multi-core environment.

According to a first aspect of the present invention a patching method is provided in a multi-core environment, where the method includes: sending, by a management Virtual Central Processing Unit, called hereinafter VCPU, an inter-core non-maskable interrupt to each target Virtual Central Processing Unit in a target VCPU group which share a code segment, so that said each target VCPU enters a patch synchronization state, in response to the inter-core non-maskable interrupt; and monitoring, by the management VCPU, the patch synchronization state of said each target VCPU, and after all the target VCPUs have entered the patch synchronization state, modifying a first instruction of an original function to be patched of said each target VCPU into an abnormal instruction for involving the original function to be patched in an exception handling process, and outputting a patch synchronization state end notification to all the target VCPUs, so that judging, by the target VCPU, whether a predetermined period of time has elapsed after the patches become effective, and if the predetermined period of time has elapsed after the patches become effective, determining that all the threads of all the VCPUs in the target VCPU group which share the code segment have been scheduled at least once; wherein the predetermined period of time is longer than a task starvation time of the system, or, whether a thread with a lowest priority of all the target VCPUs in the target VCPU group which share the code segment has been scheduled, and if the thread with a lowest priority of all the target VCPUs in the target VCPU group which share the code segment has been scheduled, determining that all the threads of all the target VCPUs in the target VCPU group which share the code segment have been scheduled at least once; modifying, by the target VCPU, a second instruction of the original function to be patched into a no-operation instruction, modifying a first instruction of the original function to be patched into an instruction of unconditional jump to the new patch function, if all the threads of all the target VCPUs in the target VCPU group which share the code segment have been scheduled at least once; modifying (S704) the return address of the exception handling into an address of the new patch function, if not all the threads of all the target VCPUs in the target VCPU group which share the code segment have been scheduled at least once in the exception handling process, which is triggered when the original function to be patched is executed to the abnormal instruction.

According to a second aspect of the present invention a patching method is provided in a multi-core environment, where the method includes: disabling, by a target Virtual Central Processing Unit, called hereinafter VCPU, an interrupt of a corresponding target Virtual Central Processing Unit in a target VCPU group which share a code segment according to a received inter-core non-maskable interrupt, and outputting a notification that the corresponding target VCPU has entered a patch synchronization state;refreshing, by the target VCPU, an instruction cache of the corresponding target VCPU to make patches effective, and enabling the interrupt of the corresponding target VCPU in the target VCPU group, after obtaining a patch synchronization state end notification; and judging, by the target VCPU, whether a predetermined period of time has elapsed after the patches become effective, and if the predetermined period of time has elapsed after the patches become effective, determining that all the threads of all the VCPUs in the target VCPU group which share the code segment have been scheduled at least once; wherein the predetermined period of time is longer than a task starvation time of the system, or, whether a thread with a lowest priority of all the target VCPUs in the target VCPU group which share the code segment has been scheduled, and if the thread with a lowest priority of all the target VCPUs in the target VCPU group which share the code segment has been scheduled, determining that all the threads of all the target VCPUs in the target VCPU group which share the code segment have been scheduled at least once; modifying, by the target VCPU, a second instruction of the original function to be patched into a no-operation instruction, modifying a first instruction of the original function to be patched into an instruction of unconditional jump to the new patch function, and modifying a return address of the exception handling into an address of the new patch function, if all the threads of all the target VCPUs in the target VCPU group which share the code segment have been scheduled at least once; modifying (S704) the return address of the exception handling into the address of the new patch function, if not all the threads of all the target VCPUs in the target VCPU group which share the code segment have been scheduled at least once.

According to a third aspect of the present invention a patching device is provided in a multi-core environment, where the patching device includes: a non-maskable interrupt sending unit, configured to send an inter-core non-maskable interrupt to each target Virtual Central Processing Unit, called hereinafter VCPU, in a target VCPU group which share a code segment;a patch synchronization state monitoring unit, configured to monitor a patch synchronization state of said each target VCPU in the target VCPU group; a patch activation unit, configured to modify a first instruction of an original function to be patched of said each target VCPU into an abnormal instruction for involving the original function to be patched in an exception handling process, after all the target VCPUs have entered the patch synchronization state; and a patch synchronization end notification unit, configured to output a patch synchronization state end notification to all the target VCPUs, after the patch activation unit has modified the first instructions of all original functions to be patched..

According to a fourth aspect of the present invention a patching device is provided in a multi-core environment, where the patching device includes: a non-maskable interrupt response unit, configured to disable an interrupt of a corresponding target Virtual Central Processing Unit, called hereinafter VCPU, in a target VCPU group which shares a code segment according to a received inter-core non-maskable interrupt, and output a notification that the corresponding target VCPU has entered a patch synchronization state;a patch effective unit, configured to refresh an instruction cache of the corresponding target VCPU to make patches effective, and enable the interrupt of the corresponding target VCPU in the target VCPU group, after obtaining a patch synchronization state end notification; and a scheduling judgment unit, configured to judge whether all threads of all the target VCPUs in the target VCPU group which share the code segment have been scheduled at least once; wherein the scheduling judgment unit is a first scheduling judgment unit configured to judge whether a predetermined period of time has elapsed after the patches become effective, and if the predetermined period of time has elapsed after the patches become effective, determine that all the threads of all the target-VCPUs in the target VCPU group which share the code segment have been scheduled at least once or the scheduling judgment unit is a second scheduling judgment unit configured to judge whether a thread with the lowest priority of all the target VCPUs in the target VCPU group which share the code segment has been scheduled, and if the thread with a lowest priority of all the target VCPUs in the target VCPU group which share the code segment has been scheduled, determine that all the threads of all the target VCPUs in the target VCPU group which share the code segment have been scheduled at least once; and a new patch function effective unit, configured to modify a second instruction of the original function to be patched into a no-operation instruction, modify a first instruction of the original function to be patched into an instruction of unconditional jump to the new patch function, and modify a return address of exception handling into an address of the new patch function, if all threads of all the target VCPUs in the target VCPU group which share the code segment have been scheduled at least once; or configured to modify the return address of exception handling into the address of the new patch function if not all threads of all the target VCPUs in the target VCPU group which share the code segment have been scheduled at least once.

As can be seen from the patching method and device according to the present invention, synchronization of VCPUs which share a code segment is realized in the mode of synchronization of inter-core non-maskable interrupts, and after all the target VCPUs which share the code segment have entered the patch synchronization state, the first instructions of the original functions to be patched of all the target VCPUs are modified into abnormal instructions, and the original function to be patched is enabled to jump to a new patch function in the exception handling process, and thus simultaneous effectiveness of patches of all the VCPUs which share the code segment is realized when activating the patches in the multi-core environment. Furthermore, compared with the existing inter-core synchronization message mode, the mode of inter-core non-maskable interrupt in the present invention has the effect of low synchronization time overhead and high reliability when activating patches.

### BRIEF DESCRIPTION OF THE DRAWINGS

FIG. 1 is a schematic logic diagram of a multi-core processor according to an embodiment of the present invention;
FIG. 2 is a block diagram illustrating the principle of a patching device of a management VCPU according to an embodiment of the present invention;
FIG. 3 is a block diagram illustrating the principle of a patching device of a target VCPU according to an embodiment of the present invention;
FIG. 4 is a detailed block diagram of an exception handling unit 303 in FIG. 3;
FIG. 5 is a schematic flow chart of a patching method in a multi-core environment according to an embodiment of the present invention;
FIG. 6 is a schematic flow chart of a patching method in a multi-core environment according to an embodiment of the present invention;
FIG. 7 is a detailed schematic flow chart of an exception handling process in FIG. 6;
FIG. 8 is a flow chart of a detailed implementation of a patching method in a multi-core environment according to an embodiment of the present invention;
FIG. 9 is a flow chart of a detailed implementation of exception handling performed by a patching device in a multi-core environment according to an embodiment of the present invention; and
FIG. 10 is a flow chat of another detailed implementation of exception handling performed by a patching device in a multi-core environment according to an embodiment of the present invention.

### DETAILED DESCRIPTION OF THE EMBODIMENTS

In order to make the objectives, technical solutions, and advantages of the present invention more comprehensible, the technical solutions of the present invention will be clearly described in the following with reference to the accompanying drawings. It is obvious that the embodiments to be described are only a part rather than all of the embodiments of the present invention.

Hereinafter, the specific embodiments of the present invention are illustrated in detail with reference to the accompanying drawings.

### Embodiment 1

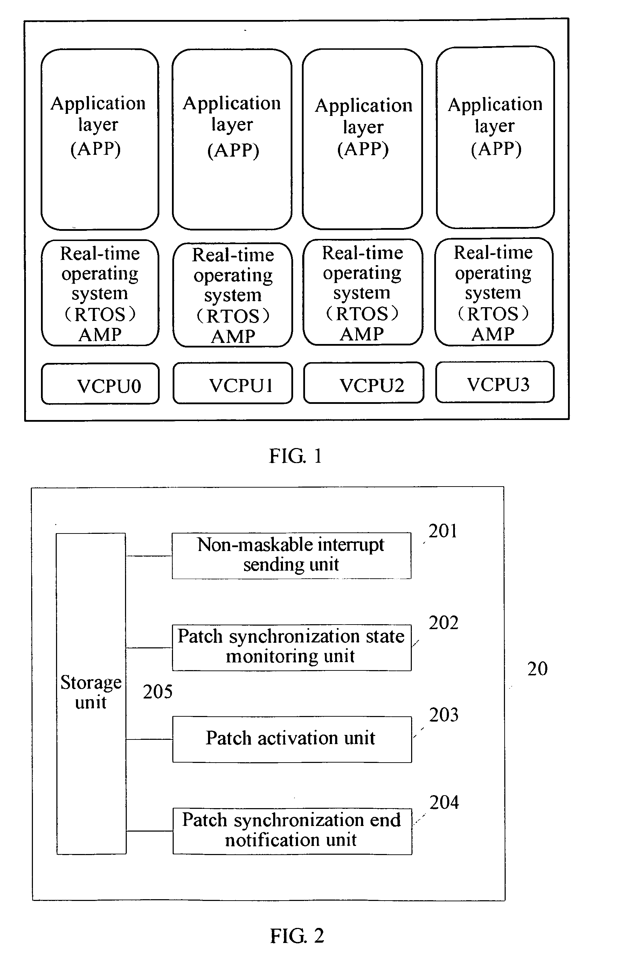

The embodiment of the present invention provides a patching device in a multi-core environment. The patching device of this embodiment is applied in a multi-core AMP system. FIG. 1 is a schematic logic diagram of a multi-core AMP system according to this embodiment. As shown in FIG. 1, as for logical layers, the lowest layer is a multi-core processor hardware platform, including multiple VCPUs, such as VCPU0, VCPU1, VCPU2, and VCPU3; the middle layer is an operating system layer, and an individual operating system RTOS runs on each VCPU; and a layer above the operating system layer is an application (APP) layer.

The VCPUs of this embodiment are divided into management VCPUs and target VCPUs according to different functions. In this embodiment, the management VCPU is VCPU0, other VCPUs (VCPU1, VCPU2, and VCPU3) which share a code segment are target VCPUs, and the multiple VCPUs having the shared code segment form a target VCPU group.

A patching device associated with the management VCPU (referred to as patching device of the management VCPU) is corresponding to the APP layer of the management VCPU, a patching device associated with the target VCPUs (referred to as patching device of the target VCPUs) is corresponding to the APP layers of the target VCPUs. The patching device of the management VCPU interacts with the patching device of the target VCPUs to perform patching operation on the target VCPUs, so that patches of all the target VCPUs which share the code segment become effective synchronously.

FIG. 2 is a block diagram illustrating the principle of a patching device of a management VCPU according to an embodiment of the present invention. A patching device 20 in FIG. 2 includes a non-maskable interrupt sending unit 201, a patch synchronization state monitoring unit 202, a patch activation unit 203, and a patch synchronization end notification unit 204.

The non-maskable interrupt sending unit 201 is configured to send an inter-core non-maskable interrupt to each target VCPU in a target VCPU group which shares a code segment. It should be understood that, each target VCPU in the target VCPU group enters a patch synchronization state, in response to the inter-core non-maskable interrupt.

The patch synchronization state monitoring unit 202 is configured to monitor a patch synchronization state of each target VCPU in the target VCPU group.

The patch activation unit 203 is configured to modify a first instruction of an original function to be patched of the target VCPUs into an abnormal instruction, if all the target VCPUs have entered the patch synchronization state.

Herein, the abnormal instruction may adopt a Break instruction as an instruction for involving the original function to be patched in exception handling; and for some special processors, may also select some invalid instructions (that is, instructions not existing in the special processors) as an instruction for involving the original function to be patched in exception handling.

The patch synchronization end notification unit 204 is configured to output a patch synchronization state end notification to all the target VCPUs after the patch activation unit has modified instructions of all original functions to be patched.

It should be understood that, after acquiring the patch synchronization state end notification, the patching device of the target VCPUs ends the patch synchronization state, and enables the original function to be patched to jump to a new patch function in an exception handling process, which is triggered when the original function to be patched is executed to the abnormal instruction. That is to say, when the calling of the original function to be patched by the system gets abnormal, complete effectiveness of patches is realized through the exception handling process.

Optionally, the patching device 20 in this embodiment further includes a storage unit 205 configured to save information of all the original functions to be patched of the target VCPUs. It should be understood that, the storage unit 205 herein may be an inter-core shared memory, and can be accessed by all VCPUs in the multi-core AMP system.

In one implementation, the patch activation unit 203 is specifically configured to modify the first instructions of all the original functions to be patched into abnormal instructions according to the information of all the original functions to be patched acquired from the storage unit if all the target VCPUs have entered the patch synchronization state.

Optionally, the storage unit 205 is further configured to save inter-core synchronization information, where the inter-core synchronization information includes a first shared variable and a second shared variable.

In one implementation, the patch synchronization state monitoring unit 202 is specifically configured to judge whether the value of the first shared variable is equal to the number of the target VCPUs in the target VCPU group which share the code segment, and if the value of the first shared variable is equal to the number of the target VCPUs in the target VCPU group which share the code segment, determine that all the target VCPUs have entered the patch synchronization state.

The patch synchronization end notification unit 204 is specifically configured to set the value of the second shared variable to notify all the target VCPUs of ending the patch synchronization state, after the patch activation unit has modified the first instructions of all the original functions to be patched. If the value of the second shared variable is initialized to 0, the setting herein may be understood as setting the value of the second shared variable to 1. It should be understood that, the embodiment of the present invention includes, but is not limited to, this implementation.

It can be seen that, in the patching device of the management VCPU of the embodiment of the present invention, the synchronization of VCPUs which share a code segment is realized in the mode of synchronization of inter-core non-maskable interrupts, and after all the target VCPUs which share the code segment have entered the patch synchronization state, the first instructions of the original functions to be patched of all the target VCPUs are modified into abnormal instructions, so that the patching device of the target VCPUs enables the original function to be patched to jump to a new patch function in the exception handling process, and thus simultaneous effectiveness of patches of all the VCPUs which share the code segment is realized when activating the patches in the multi-core environment. Furthermore, compared with the existing inter-core synchronization message mode, the mode of inter-core non-maskable interrupt of the present invention has the effect of low synchronization time overhead and high reliability when activating patches.

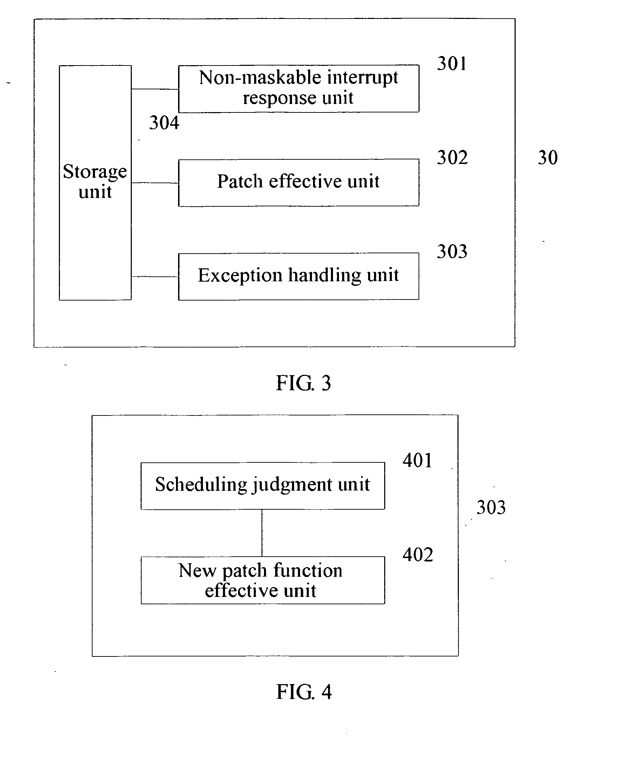

FIG. 3 is a block diagram illustrating the principle of a patching device of a target VCPU according to an embodiment of the present invention. A patching device 30 in FIG. 3 includes a non-maskable interrupt response unit 301, a patch effective unit 302, and an exception handling unit 303.

The non-maskable interrupt response unit 301 is configured to disable an interrupt of a corresponding target VCPU in a target VCPU group which share a code segment according to a received inter-core non-maskable interrupt, and output a notification that the target VCPU has entered a patch synchronization state.

It should be understood that, the entering the patch synchronization state herein means synchronously entering an interrupt state.

The patch effective unit 302 is configured to refresh an instruction cache of the corresponding target VCPU to make patches effective, and enable the interrupt of the corresponding target VCPU in the target VCPU group, so as to end the patch synchronization state, after acquiring a patch synchronization state end notification.

The exception handling unit 303 is configured to enable an original function to be patched to jump to a new patch function in an exception handling process, which is triggered when the original function to be patched is executed to an abnormal instruction.

Herein, the exception handling process, which is triggered when the original function to be patched is executed to the abnormal instruction, may be understood as that the calling of the original function to be patched by the system gets abnormal.

Optionally, the patching device 30 of this embodiment further includes a storage unit 304 configured to save inter-core synchronization information, where the inter-core synchronization information includes a first shared variable and a second shared variable. It should be understood that, the storage unit 304 herein may be an inter-core shared memory, which can be accessed by all the VCPUs in the multi-core AMP system.

In one implementation, the non-maskable interrupt response unit 301 is specifically configured to disable the interrupt of the corresponding target VCPU in the target VCPU group which share the code segment according to the received inter-core non-maskable interrupt, and perform an add 1 process on the value of the first shared variable to indicate that the target VCPU has entered the patch synchronization state. It should be understood that, the add 1 process herein is just one implementation, and the embodiment of the present invention includes, but is not limited to, this implementation. If each target VCPU performs the add 1 process on the value of the first shared variable, the management VCPU can determine whether all the target VCPUs have entered the patch synchronization state by judging whether the value of the first shared variable is equal to the number of the target VCPUs in the target VCPU group which share the code segment.

In one implementation, the patch effective unit 302 is specifically configured to refresh the instruction cache of the target VCPU to make patches effective, and enable the interrupt of the corresponding target VCPU in the target VCPU group, to end the patch synchronization state, when the value of the second shared variable is detected to be 1.

FIG. 4 is a detailed block diagram of the exception handling unit 303 in FIG. 3. The exception handling unit 303 of this embodiment includes a scheduling judgment unit 401 and a new patch function effective unit 402.

The scheduling judgment unit 401 is configured to judge whether all threads of all the target VCPUs in the target VCPU group which share the code segment have been scheduled at least once.

The new patch function effective unit 402 is configured to modify a second instruction of the original function to be patched into a no-operation instruction, modify a first instruction of the original function to be patched into an instruction of unconditional jump to a new patch function, and modify a return address of exception handling into an address of the new patch function, if all the threads have been scheduled at least once; or, modify the return address of exception handling into the address of the new patch function, if not all the threads have been scheduled at least once.

In one implementation, the scheduling judgment unit 401 is a first scheduling judgment unit configured to judge whether a predetermined period of time has elapsed after the patches become effective, and if yes, determine that all the threads of all the target VCPUs in the target VCPU group which share the code segment have been scheduled at least once; if not, determine that not all the threads of all the target VCPUs in the target VCPU group which share the code segment have been scheduled at least once. Herein, the predetermined period of time may be slightly longer than a task starvation time of the system.

In another implementation, the scheduling judgment unit 401 is a second scheduling judgment unit configured to judge whether a thread with the lowest priority of all the target VCPUs in the target VCPU group which share the code segment has been scheduled, and if yes, determine that all the threads of all the target VCPUs in the target VCPU group which share the code segment have been scheduled at least once; if not, determine that not all the threads of all the target VCPUs in the target VCPU group which share the code segment have been scheduled at least once.

It can be seen that, in the patching device of the target VCPU according to the embodiment of the present invention, the synchronization of VCPUs which share a code segment is realized in the mode of synchronization of inter-core non-maskable interrupts, and the original function to be patched is enabled to jump to the new patch function in the exception handling process, and thus simultaneous effectiveness of patches of all the target VCPUs which share the code segment is realized when activating the patches in the multi-core environment. Furthermore, compared with the existing inter-core synchronization message mode, the mode of inter-core non-maskable interrupt of the present invention has the effect of low synchronization time overhead and high reliability when activating patches.

Furthermore, in the specific exception handling process, the time when patches become completely effective is judged through a timeout mechanism or based on priority, so that after patches of all the target VCPUs which share the code segment become simultaneously effective, the re-calling of the original function to be patched does not get abnormal, but directly jumps to an address of the new patch function for execution. After waiting till all the threads have been scheduled once, the patching device of this embodiment modifies the instruction of the original function to be patched, so that the original function to be patched jumps to a new patch function. In this mode, the situation that a task is switched out by other tasks when being executed between the first instruction and the second instruction of the original function to be patched does not occur on the target VCPU, and thus the influence of the delay slot instruction of the jump instruction on patch activation in the MIPS processor is eliminated, and the patching device of this embodiment supports patching requirements such as BUG repair when the product is in test or Internet operation, and thereby the serviceability of the product is improved.

### Embodiment 2

This embodiment provides a patching method in a multi-core environment, where the architecture of the multi-core environment can be seen in FIG. 1. The patching method of this embodiment includes a patching method applicable to a patching device of a management VCPU and a patching method applicable to a patching device of a target VCPU. The method of this embodiment realizes synchronous activation of patches of target VCPUs through an inter-core synchronization mechanism, and realizes effectiveness of patches of the target VCPUs during exception handling.

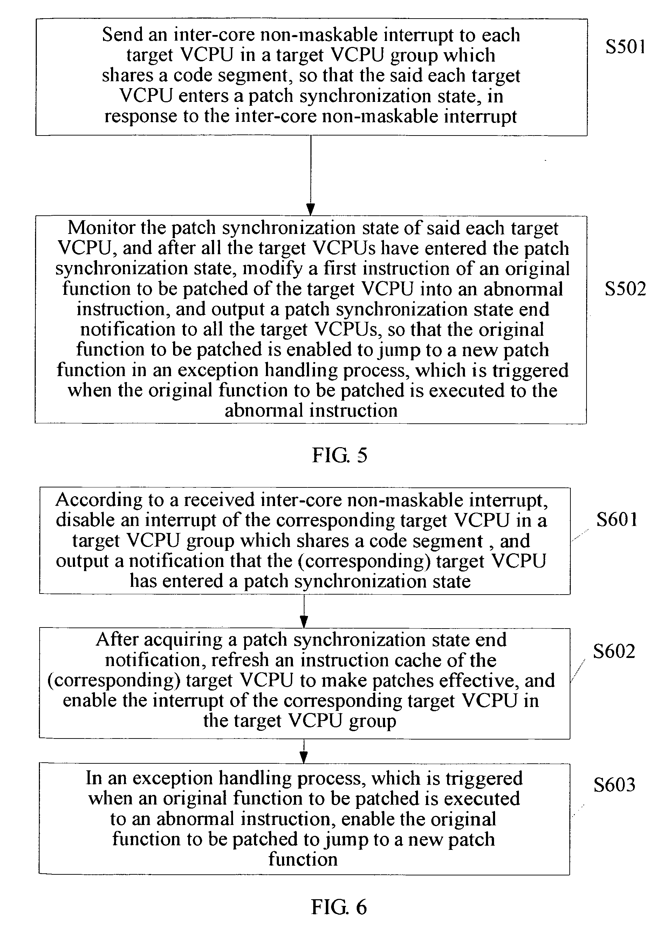

FIG. 5 is a schematic flow chart of a patching method in a multi-core environment according to an embodiment of the present invention. It should be noted that, the patching method of this embodiment is applicable to a patching device of a management VCPU, as shown in FIG. 5.

In step S501, an inter-core non-maskable interrupt is sent to each target VCPU in a target VCPU group which shares a code segment, so that said each target VCPU enters a patch synchronization state, in response to the inter-core non-maskable interrupt. It should be noted that, the inter-core non-maskable interrupt herein is an instruction instead of a message.

In step S502, the patch synchronization state of said each target VCPU is monitored, and after all the target VCPUs have entered the patch synchronization state, a first instruction of an original function to be patched of the target VCPU is modified into an abnormal instruction, and a patch synchronization state end notification is output to all the target VCPUs, so that the original function to be patched is enabled to jump to a new patch function in an exception handling process, which is triggered when the original function to be patched is executed to the abnormal instruction.

Herein, the abnormal instruction may adopt a Break instruction as an instruction for involving the original function to be patched in exception handling; and in some special processors, may also select some invalid instructions (that is, instructions not existing in the special processors) as an instruction for involving the original function to be patched in exception handling.

Optionally, the method further includes: acquiring information of the original function to be patched of the target VCPU, and saving the information of the original function to be patched in a shared memory. The shared memory can be accessed by all the VCPUs in the multi-core AMP system.

In one implementation, the modifying the first instruction of the original function to be patched of the target VCPU into the abnormal instruction in step S502 specifically includes: according to the information of the original function to be patched of the target VCPU acquired from the shared memory, modifying the first instruction of the original function to be patched of the target VCPU into an abnormal instruction.

Optionally, the shared memory further saves inter-core synchronization information, where the inter-core synchronization information includes a first shared variable and a second shared variable.

In one implementation, the monitoring the patch synchronization state of the target VCPU in step S502 specifically includes: judging whether the value of the first shared variable is equal to the number of the target VCPUs in the target VCPU group which share the code segment, and if the value of the first shared variable is equal to the number of the target VCPUs in the target VCPU group which share the code segment, determining that all the target VCPUs have entered the patch synchronization state; otherwise, determining that not all the target VCPUs have entered the patch synchronization state.

In one implementation, the outputting the patch synchronization state end notification to all the target VCPUs in step S502 includes: setting a value of the second shared variable to notify all the target VCPUs of ending the patch synchronization state. If the value of the second shared variable is initialized to 0, the setting herein may be understood as setting the value of the second shared variable to 1. It should be understood that, the embodiment of the present invention includes, but is not limited to, this implementation.

It can be seen that, in the patching method of the embodiment of the present invention, the synchronization of VCPUs which share a code segment is realized in the mode of synchronization of inter-core non-maskable interrupts, and after all the target VCPUs which share the code segment have entered the patch synchronization state, the first instructions of the original functions to be patched of all the target VCPUs are modified into abnormal instructions, so that the patching device of the target VCPU enables the original function to be patched to jump to the new patch function in the exception handling process, and thus simultaneous effectiveness of patches of all the VCPUs which share the code segment is realized when activating the patches in a multi-core environment. Furthermore, compared with the existing inter-core synchronization message mode, the mode of inter-core non-maskable interrupt of the present invention has the effect of low synchronization time overhead and high reliability when activating patches.

FIG. 6 is a schematic flow chart of another patching method in a multi-core environment according to an embodiment of the present invention. It should be noted that, the patching method of this embodiment is applicable to a patching device of a target VCPU. As shown in FIG. 6, the method includes the following steps.

In step S601, according to a received inter-core non-maskable interrupt, an interrupt of the corresponding target VCPU in a target VCPU group which shares a code segment is disabled, and a notification that the corresponding target VCPU has entered a patch synchronization state is output.

It should be understood that, the entering the patch synchronization state herein means synchronously entering an interrupt state.

In step S602, after acquiring a patch synchronization state end notification, an instruction cache of the corresponding target VCPU is refreshed to make patches effective, and the interrupt of the corresponding target VCPU in the target VCPU group is enabled, to end the patch synchronization state.

In step S603, in an exception handling process, which is triggered when an original function to be patched is executed to an abnormal instruction, the original function to be patched is enabled to jump to a new patch function.

Herein, the exception handling process, which is triggered when the original function to be patched is executed to the abnormal instruction, may be understood that the calling of the original function to be patched by the system gets abnormal.

In one implementation, the enabling the original function to be patched to the new patch function in the exception handling process in step S603 includes:
judging whether all threads of all the target VCPUs in the target VCPU group which share the code segment have been scheduled at least once, and if yes, modifying a second instruction of the original function to be patched to a no-operation instruction, modifying a first instruction of the original function to be patched to an instruction of unconditional jump to the new patch function, and modifying a return address of exception handling into an address of the new patch function; otherwise, modifying the return address of exception handling into the address of the new patch function.

In one implementation, the judging whether all the threads of all the target VCPUs in the target VCPU group which share the code segment have been scheduled at least once includes:
judging whether a predetermined period of time has elapsed after the patches become effective, and if yes, determining that all the threads of all the VCPUs in the target VCPU group which share the code segment have been scheduled at least once; otherwise, determining that not all the threads of all the VCPUs in the target VCPU group which share the code segment have been scheduled at least once.

In another implementation, the judging whether all the threads of all the target VCPUs in the target VCPU group which share the code segment have been scheduled at least once may include:
judging whether a thread with the lowest priority of all the target VCPUs in the target VCPU group which share the code segment has been scheduled, and if yes, determining that all the threads of all the target VCPUs in the target VCPU group which share the code segment have been scheduled at least once; otherwise, determining that not all the threads of all the target VCPUs in the target VCPU group which share the code segment have been scheduled at least once.

Optionally, a shared memory is applied for to save inter-core synchronization information, where the inter-core synchronization information includes a first shared variable and a second shared variable.

The outputting the notification that the target VCPU has entered the patch synchronization state in step S601 includes: performing an add 1 process on the value of the first shared variable to indicate that the target VCPU has entered the patch synchronization state. It should be understood that, the add 1 process herein is just one implementation, and the embodiment of the present invention includes, but is not limited to, the implementation.

The acquiring the patch synchronization state end notification in step S602 includes: when the value of the second shared variable is detected to be 1, determining that the patch synchronization state is ended.

It can be seen that, in the patching method of the embodiment of the present invention, the synchronization of VCPUs which share a code segment is realized in the mode of synchronization of inter-core non-maskable interrupts, and the original function to be patched is enabled to jump to the new patch function in the exception handling process, and thus simultaneous effectiveness of patches of all the target VCPUs which share the code segment is realized when activating the patches in a multi-core environment. Furthermore, compared with the existing inter-core synchronization message mode, the mode of inter-core non-maskable interrupt of the present invention has the effect of low synchronization time overhead and high reliability when activating patches.

Furthermore, in the specific exception handling process, the time when patches become completely effective is judged through a timeout mechanism or based on priority, so that the re-calling of the original function to be patched does not get abnormal, but directly jumps to an address of the new patch function for execution, after patches of all the target VCPUs which share the code segment become simultaneously effective. After waiting till all the threads have been scheduled once, the patching device of this embodiment modifies the instruction of the patched function, so that the original function to be patched jumps to a new patch function. In this mode, the situation that a task is switched out by other tasks when being executed between the first instruction and the second instruction of the original function to be patched does not occur on the target VCPU, and thus the influence of the delay slot instruction of the jump instruction on patch activation in the MIPS processor is eliminated, and the patching device of this embodiment supports patching requirements such as BUG repair when the product is in test or Internet operation, and thereby the serviceability of the product is improved.

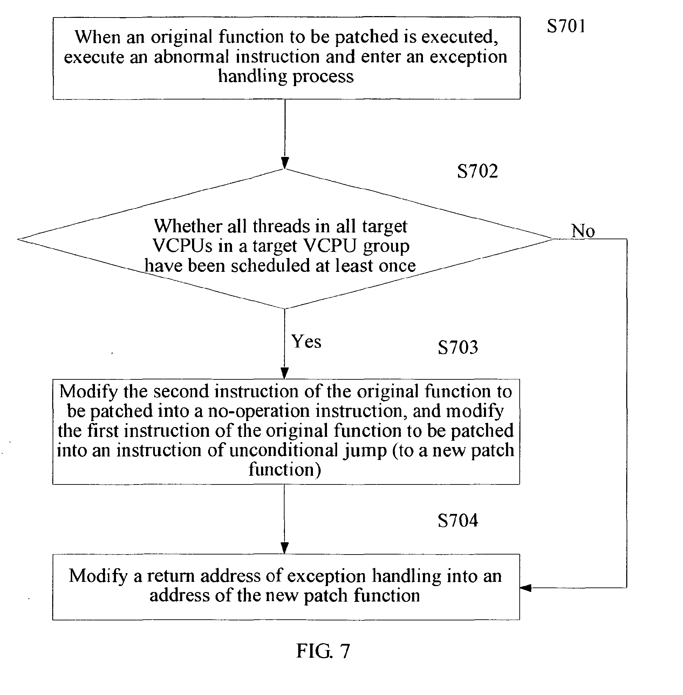

FIG. 7 is a detailed flow chart of the exception handling process in FIG. 6. As shown in FIG. 7, the exception handling is realized through the following steps in this embodiment.

In step S701, when an original function to be patched is executed, a Break instruction is executed to trigger abnormality, and enter an exception handling process.

In step S702, it is judged whether all threads in all target VCPUs in a target VCPU group have been scheduled at least once.

Because the first instruction of the original function to be patched has been modified into the Break instruction, when a thread is scheduled, if the original function to be patched is executed to the first instruction, entering an exception handling process. The exception handling process ends and returns to an address of the new patch function (see step S704), so the scheduled thread will not stop at the second instruction of the original function to be patched. When all the threads have been scheduled once, it indicates that all the threads do not stop at the second instruction of the original function to be patched.

The judging method in step S702 may include:
(1) Timeout judgment: judging whether a predetermined period of time has elapsed after patch activation of the target VCPU, and if the predetermined period of time has elapsed after patch activation of the target VCPU, determining that all the threads of all the VCPUs in the target VCPU group have been scheduled at least once; and
(2) Lowest priority judgment: judging whether a thread with the lowest priority in all the VCPUs in the target VCPU group has been scheduled, and if the thread with the lowest priority in all the VCPUs in the target VCPU group has been scheduled, determining that all the threads of all the VCPUs in the target VCPU group have been scheduled at least once.

In step S703, if all the threads have been scheduled at least once, the second instruction of the original function to be patched is modified into a no-operation instruction, and the first instruction of the original function to be patched is modified into an instruction of unconditional jump to the new patch function in the exception handling process, and step S704 is performed; otherwise, step S704 is directly performed.

In step S704, a return address of exception handling is modified into an address of the new patch function.

It can be seen that, in the patching method of the embodiment of the present invention, simultaneous effectiveness of patches of all the VCPUs is ensured through an inter-core message mechanism; the problem caused by the delay slot instruction in an MIPS environment is solved with an exception handling mechanism; and during patching, the patched VCPUs do not require synchronization waiting, so that the service operation is not interrupted.

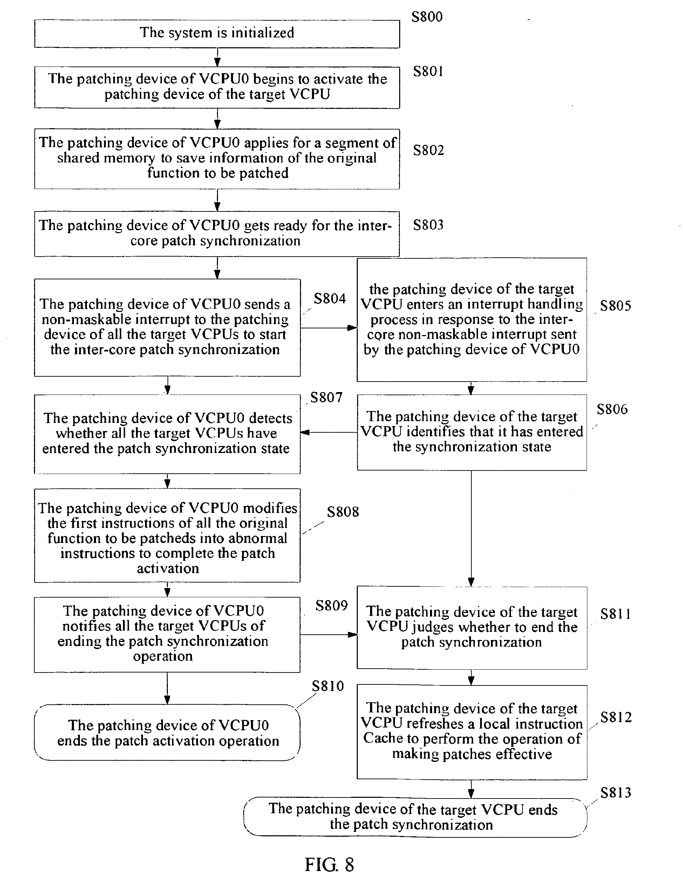

FIG. 8 is a flow chart of a detailed implementation of a patching method in a multi-core environment according to an embodiment of the present invention. In this embodiment, the management VCPU is VCPUO. As shown in FIG. 8, the method includes the follow steps.

In step S800, the system is initialized.

A patching device of VCPUO applies for a segment of inter-core shared memory to save inter-core synchronization information MCPAT_SYN_INFO, which is used to perform synchronization between VCPUO and a target VCPU group. In order to share information of patch activation, in the embodiment of the present invention, a data structure MCPAT_SYN_INFO is defined to save the inter-core synchronization information, and the patching device of VCPUO and the patching device of a target VCPU in the target VCPU group both are capable of viewing values of shared variables in the data structure. The data structure may be defined as follows:
typedef struct tagMCPatSynInfo
   {
volatile VOS_UINT32 ulStartSynAckFlag; //shared variable A, indicating the number of VCPUs that have entered the patch synchronization state;
volatile VOS_UINT32 ulEndSynFlag; //shared variable B, if being set, indicating that the patching device of VCPU0 has completed the patch activation, and at this time, the patching device of the target VCPU may end the patch synchronization state of the target VCPU;
} MCPAT_SYN_INFO.

In step S801, the patching device of VCPUO begins to activate the patching device of the target VCPU.

In order to ensure that the activation operation is not reentered (interrupted), an interrupt of VCPUO is disabled and will not be responded to any more.

In step S802, the patching device of VCPU0 applies for a segment of shared memory to save information of the original function to be patched in the shared memory, so that the patching device of the target VCPU is capable of completing the patch synchronization operation in cooperation with the patching device of VCPU0, which specifically includes the following steps.
(1) The patching device of VCPU0 acquires addresses of all original functions to be patched saved in the patching device of the target VCPU.
(2) The patching device of VCPU0 applies for a segment of shared memory.
(3) The patching device of VCPUO saves the information of all the original functions to be patched in the shared memory. In the embodiment of the present invention, the information of the original function to be patched is represented by a data structure MCPAT_FUNC_NODE, and includes: a function address, a first/second instruction value of the original function to be patched, the number of the target VCPUs, a current system TICK value, and VCPU state identification initialization. The data structure may be defined as follows:
   typedef struct tagMCPatFuncNode
      {
   VOS_UINT32 aulFuncPtr[N]; //address of the original function to be patched, where N represents the maximum number of patch functions in a patch unit;
   VOS_UINT32 aulFunclns1[N]; //the first instruction of the original function to be patched, where N represents the maximum number of patch functions in a patch unit;
   VOS_UINT32 aulFunclns2[N]; //the second instruction of the original function to be patched, where N represents the maximum number of patch functions in a patch unit;
   VOS_UINT32 ulFlag; //patch function state identification: if being 0, indicating that the first instruction of the original function to be patched may be modified into an unconditional jump instruction (jump to a new patch function), and the second instruction may be modified into a NOP instruction for filling the delay slot of the jump instruction;
   VOS_UINT32 ulStartTick; //system TICK value when activating the patch function;
   VOS_UINT8 aucVCPUFlag[N]; //VCPU state identification: N represents the number of VCPUs of the system, each byte represents one VCPU, and if being 1, indicating that the corresponding VCPU has met the condition of making the patches completely effective;
   }MCPAT_FUNC_NODE.
(4) The patching device of VCPU0 saves the address of the shared memory in a shared pointer variable g_pstShareFuncNode[Index] of the target VCPU group, where Index represents the ID of the target VCPU group.

In step S803, the patching device of VCPU0 sets fields ulStartSynAckFlag and ulEndSynFlag in the data structure MCPAT_SYN_INFO of the inter-core synchronization information to 0 to get ready for the patch synchronization.

In step S804, the patching device of VCPUO sends an inter-core non-maskable interrupt to the patching device of all the target VCPUs to start the inter-core patch synchronization.

In step S805, the patching device of the target VCPU enters an interrupt handling process, in response to the inter-core non-maskable interrupt sent by the patching device of VCPU0, and disables the interrupt of the target VCPU, so that the target VCPU enters the inter-core patch synchronization state.

In step S806, the patching device of the target VCPU adds, in the Atoms way, 1 to the field ulStartSynAckFlag in the data structure MCPAT_SYN_INFO of the inter-core synchronization information, so as to identify that the patching device of the target VCPU itself has entered the synchronization state.

In step S807, the patching device of VCPUO cyclically detects whether the value of the field ulStartSynAckFlag in the data structure MCPAT_SYN_INFO of the inter-core synchronization information is equal to the number of the target VCPUs, and if the value of the field ulStartSynAckFlag in the data structure MCPAT_SYN_INFO of the inter-core synchronization information is equal to the number of the target VCPUs, it indicates that all the target VCPUs have entered the patch synchronization state.

In step S808, the patching device of VCPU0 modifies the first instructions of all the original functions to be patched into abnormal instructions (such as, Break instructions) to trigger the patch activation, so that the original function to be patched is enabled to jump to a new patch function in the exception handling process, which is triggered when the original function to be patched is executed to the abnormal instruction.

In step S809, the patching device of VCPU0 sets the field ulEndSynFlag in the data structure MCPAT_SYN_INFO of the inter-core synchronization information to 1 to notify all the target VCPUs of ending the patch synchronization operation.

In step S810, the patching device of VCPU0 enables the interrupt, and returns to an instruction of calling a patch activation interface, so as to end the patch activation operation.

In step S811, the patching device of the target VCPU judges in an infinite loop whether the field ulEndSynFlag in the data structure MCPAT_SYN_INFO of the inter-core synchronization information is equal to 1, and if the field ulEndSynFlag in the data structure MCPAT_SYN_INFO of the inter-core synchronization information is equal to 1, the patch synchronization is ended.

In step S812, the patching device of the target VCPU refreshes a local instruction Cache to perform the operation of making patches effective.

In step S813, the patching device of the target VCPU enables the interrupt of the target VCPU, and the interrupt handling returns to the instruction interrupted by the interrupt, so as to end the patch synchronization. At present, patches of all the target VCPUs become simultaneously effective.

It can be seen that, in the patching method of the embodiment of the present invention, the shared memory is set to save the inter-core synchronization information and the information of the original function to be patched, and the patch synchronous activation operation between the management VCPU and the target VCPUs is realized through the inter-core non-maskable interrupt.

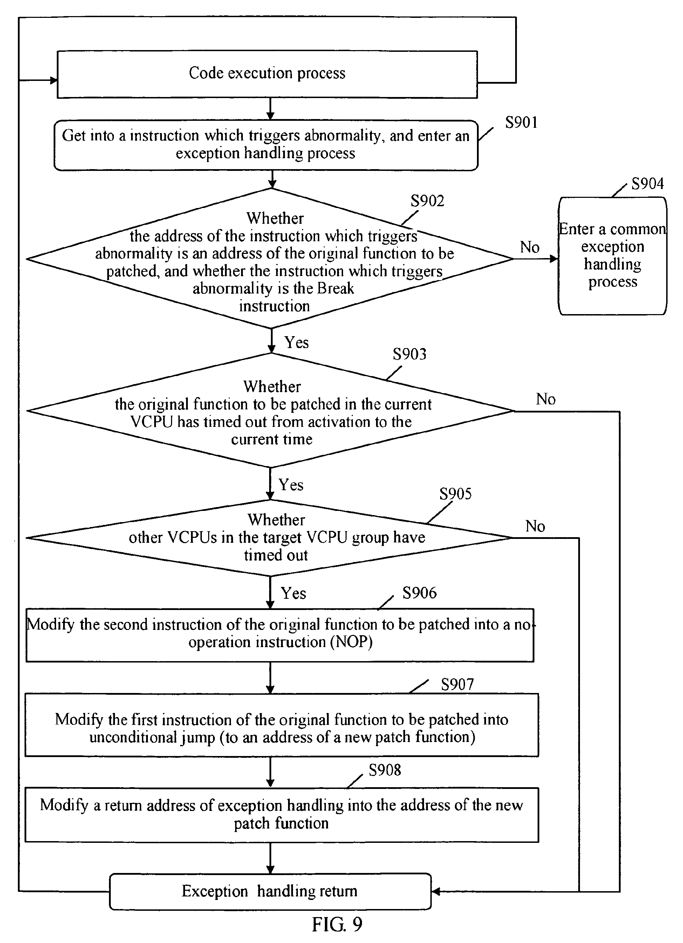

FIG. 9 is a flow chart of a detailed implementation of exception handling performed by a patching device of a target VCPU in a multi-core environment according to an embodiment of the present invention. As shown in FIG. 9, the implementation includes the following steps.

In step S901, when the target VCPU executes an original function to be patched, it gets into a Break instruction which triggers abnormality, and enters an exception handling process.

In step S902, it is judged whether the address of the instruction which triggers abnormality is an address of the original function to be patched and whether the instruction which triggers abnormality is the Break instruction, and if the address of the instruction which triggers abnormality is an address of the original function to be patched and the instruction which triggers abnormality is the Break instruction, step S903 is performed for judgment; otherwise, step S904 is performed to start a common exception handling process.

The judging whether the address of the instruction which triggers abnormality is the address of the original function to be patched includes: judging whether the address of the instruction which triggers abnormality is in the structure of patch information pointed by the shared variable g_pstShareFuncNode[index] (Index represents the group ID of a VCPU group which include the current VCPU, which has the same meaning in the following).

In step S903, it is judged whether the original function to be patched in the current VCPU has timed out from activation to the current time.

If the original function to be patched in the current VCPU has timed out from activation to the current time, the patch exception handling continues, and the current VCPU is marked as having entered timeout processing, which specifically includes: judging whether the value of an array element with the current VCPU as subscript in the field aucVCPUFlag in g_pstShareFuncNode[index] is equal to 0, and if yes, setting the value of an array element with the current VCPU as subscript to 1, which indicates that the VCPU has entered timeout processing, and at the same time, subtracting 1 from atoms of the field ulFlag (the initial value ofulFlag is set to be the number of VCPUs in the target VCPU group), which indicates that another VCPU has timed out.

If the original function to be patched in the current VCPU has not timed out from activation to the current time, step S908 is performed.

It should be understood that, in order to ensure that PCs (instruction registers) of all threads on all the target VCPUs do not stop at the second instruction of the original function to be patched when modifying the second instruction of the original function to be patched, in the method of this embodiment, it is assumed that after a preset period of time has elapsed, all the threads in the system have been scheduled at least once by the operating system, and the PCs (instruction registers) of all the threads do not stop at the second instruction of the original function to be patched.

In step S905, it is judged whether other VCPUs in the target VCPU group have timed out, which specifically includes: judging whether the value of the field ulFlag in g_pstShareFuncNode[index] is equal to 0, and if yes, performing step S906 to modify the original function to be patched; otherwise, performing step S908.

In step S906, the patch information saved in g_pstShareFuncNode[index] is acquired, and the second instruction of the original function to be patched is modified into a no-operation instruction (NOP).

In step S907, the first instruction of the original function to be patched is modified into an unconditional jump instruction (jump to an address of a new patch function), and a shared memory saving patch function information pointed by g_pstShareFuncNode[index] is released.

In step S908, the new patch function is made effective: a return address of exception handling is modified into the address of the new patch function, and the interrupt is enabled, so as to complete the exception handling process.

It can be seen that, in the method of the embodiment of the present invention, a predetermined period of time is set for judging whether all the threads have been scheduled at least once by the operating system, and different exception handling is performed according to different situations. By adopting the exception handling mechanism of this embodiment, patches will become completely effective after the set period of time, and then the re-calling of the original function to be patched does not get into Break abnormality, but directly jumps to the address of the new patch function for execution.

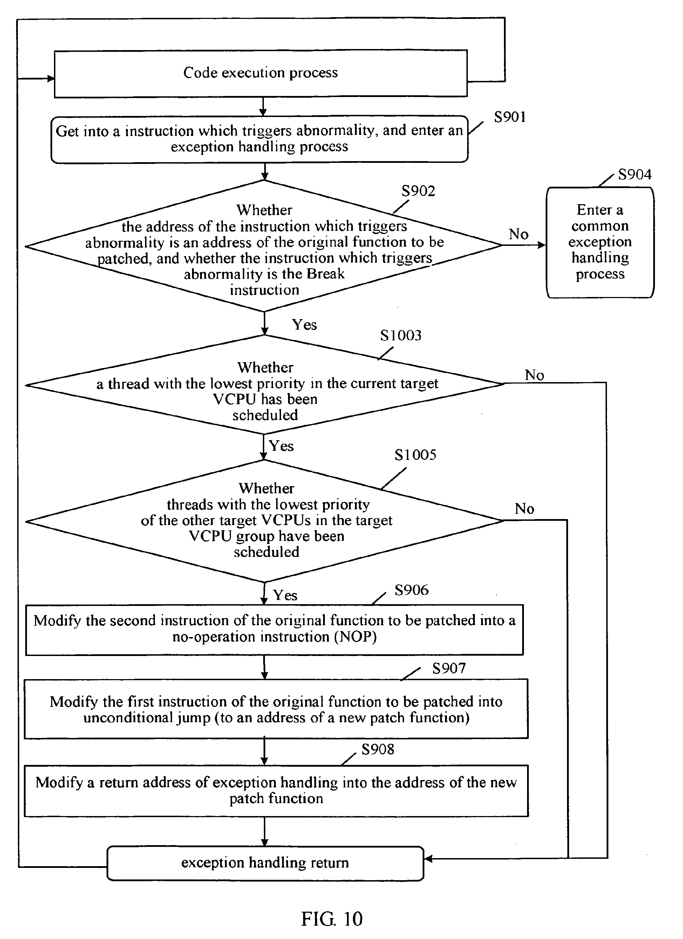

FIG. 10 is a flow chat of another detailed implementation of exception handling performed by a patching device of a target VCPU in a multi-core environment according to an embodiment of the present invention. As shown in FIG. 10, the implementation includes the followings steps.

Different from FIG. 9, in which in step S903 and step S905, the time when patches become completely effective is judged with a timeout mechanism, in the method in FIG. 10, a priority-based scheduling policy of an embedded operating system is used for this scenario, in which if a thread with the lowest priority has been scheduled, it indicates that all threads on the VCPU have been scheduled once by the operating system. Hereinafter, only the differences between FIG. 10 and FIG. 9 are described.

In step S1003, it is judged whether a thread with the lowest priority in the current target VCPU has been scheduled after patch activation is completed, and if yes, patching exception handling continues, and the current VCPU is marked as that the thread with the lowest priority has been scheduled, which specifically includes: judging whether the value of an array element with the current VCPU as subscript in the field aucVCPUFlag in g_pstShareFuncNode[index] is equal to 0, and if yes, setting the value of an array element with the current VCPU as subscript to be 1, which indicates that the thread with the lowest priority of the VCPU has been scheduled , and at the same time, subtracting 1 from atoms of the field ulFlag, which indicates that another thread with the lowest priority of the VCPU has been scheduled.

Otherwise, step S908 is performed.

In step S1005, it is judged whether a thread with the lowest priority of the other target VCPUs in the target VCPU group has been scheduled, which specifically includes: judging whether the value of the field ulFlag in g_pstShareFuncNode[index] is equal to 0, and if yes, performing step S906 to modify the original function to be patched; otherwise, performing step S908.

It can be seen that, in the method of the embodiment of the present invention, corresponding exception handling is adopted according to whether the thread with the lowest priority has been scheduled. With the exception handling mechanism of this embodiment, patches can automatically become effective, and the re-calling of the original function to be patched does not get into Break abnormality, but directly jumps to the address of the new patch function for execution.

In view of the above, in the patching method of the embodiment of the present invention, the problem of patch synchronization in the multi-core AMP shared code segment environment is solved in the mode of synchronization of inter-core non-maskable interrupts, and the influence of the delay slot instruction of the jump instruction on the patch activation in the MIPS processor is eliminated. The solution achieves low synchronization time overhead and high reliability when activating patches, eliminates the influence of the delay slot instruction of the jump instruction on the patch activation in the MIPS processor, and supports patching requirements such as BUG repair when the product is in test or Internet operation, and thereby the serviceability of the product is improved.

The following problems should be noted.
1. The embodiment of the present invention solves the problem of activating patches of the multi-core shared code segment is solved, and is also applicable in the deactivation process. The difference lies in that: in step S703, the second instruction of the original function to be patched is recovered, and the first instruction of the original function to be patched is recovered; in step S906, the second instruction of the original function to be patched is recovered; and in step S907, the first instruction of the original function to be patched is recovered.
2. In the embodiment of the present invention, a non-maskable interrupt is adopted to realize inter-core synchronization of multi-core patches. In the embedded multi-core AMP application, the following solution may also be adopted: inter-core interrupt (IPI) is supported in multi-core processors of some manufacturers, an inter-core interrupt number is maintained for inter-core synchronization of the multi-core patches in the system, the disable interrupt interface in the system does not disable the interrupt, and thus realizing the function of the non-maskable interrupt, which may be applied to processors having no non-maskable interrupt characteristics.
3. In the embodiment of the present invention, the Break instruction is adopted to serve as an instruction that involves the original function to be patched in abnormally handling, and in some special processors, some invalid instructions (instructions not existing in the special processors) may also be selected to serve as the instruction that involves the original function to be patched in abnormally handling, and then when the calling of the original function to be patched by the system gets abnormal, the same exception handling process is performed to realize complete effectiveness of the patches.
4. In the embodiment of the present invention, the multi-core patch synchronization is realized in the mode of inter-core non-maskable interrupt, which is applicable in any system of the multi-core AMP mode, and is also applicable for other inter-core synchronization demands of non-patch functions.
5. In the embodiment of the present invention, with the exception handling mechanism, the influence of the delay slot of the MIPS processor on the patch activation is eliminated, the problem that the delay slot of the MIPS processor influences the patch activation in the single-core multi-task environment is solved, the problem of patch activation in other processor environments having the delay slot instruction of the jump instruction is also solved, and the problem of long jump of the patch in the PowerPC environment (two instructions are required to jump to a larger address space, which is similar to the influence of the delay slot) is further solved.
6. The patching device in a multi-core environment described in the previous embodiments may also be understood as a VCPU integrated with patch function.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, or an optical disk.

Finally, it should be noted that the above embodiments are merely provided for describing the technical solutions of the present invention, but not intended to limit the present invention.

## Claims

1. A patching method in a multi-core environment, **characterized in that**, the method is applied in a multi-core Asymmetrical Multi-Processing, hereafter AMP, system, the method comprises:
sending (S501), by a management Virtual Central Processing Unit, called hereinafter VCPU, an inter-core non-maskable interrupt to each target Virtual Central Processing Unit in a target VCPU group which share a code segment, so that said each target VCPU enters a patch synchronization state, in response to the inter-core non-maskable interrupt; and
monitoring (S502), by the management VCPU, the patch synchronization state of said each target VCPU, and after all the target VCPUs have entered the patch synchronization state, modifying a first instruction of an original function to be patched of said each target VCPU into an abnormal instruction for involving the original function to be patched in an exception handling process, and outputting a patch synchronization state end notification to all the target VCPUs, judging (S702), by the target VCPU, whether a predetermined period of time has elapsed after the patches become effective, and if the predetermined period of time has elapsed after the patches become effective, determining that all the threads of all the VCPUs in the target VCPU group which share the code segment have been scheduled at least wherein the predetermined period of time is longer than a task starvation once, time of the system, or, whether a thread with a lowest priority of all the target VCPUs in the target VCPU group which share the code segment has been scheduled, and if the thread with a lowest priority of all the target VCPUs in the target VCPU group which share the code segment has been scheduled, determining that all the threads of all the target VCPUs in the target VCPU group which share the code segment have been scheduled at least once;modifying (S703), by the target VCPU, the second instruction of the original function to be patched into a no-operation instruction, modifying the first instruction of the original function to be patched into an instruction of unconditional jump to the new patch function, if all the threads of all the target VCPUs in the target VCPU group which share the code segment have been scheduled at least once; modifying (S704) the return address of the exception handling into an address of the new patch function, if not all the threads of all the target VCPUs in the target VCPU group which share the code segment have been scheduled at least once in the exception handling process, which is triggered when the original function to be patched is executed to the abnormal instruction.

2. The method according to claim 1, further comprising:
Saving , by the management VCPU, information of the original function to be patched of said each target VCPU in a shared memory, wherein the information of the original function to be patched is represented by a data structure MCPAT_FLTNC_NODE, and includes: a function address, a first/second instruction value of the original function to be patched, the number of the target VCPUs, a current system TICK value, and VCPU state identification initialization; wherein
the modifying the first instruction of the original function to be patched of the target VCPU into the abnormal instruction comprises:
modifying the first instruction of the original function to be patched of the target VCPU into the abnormal instruction according to the information of the original function to be patched of the target VCPU acquired from the shared memory.

3. A patching method in a multi-core environment, **characterized in that**, the method is applied in a multi-core AMP system, the method comprises:
disabling (S601), by a target Virtual Central Processing Unit, called hereinafter VCPU, an interrupt of a corresponding target Virtual Central Processing Unit in a target VCPU group which share a code segment according to a received inter-core non-maskable interrupt, and outputting a notification that the corresponding target VCPU has entered a patch synchronization state;
refreshing (S602), by the target VCPU, an instruction cache of the corresponding target VCPU to make patches effective, and enabling the interrupt of the corresponding target VCPU in the target VCPU group, after obtaining a patch synchronization state end notification; and
judging (S702), by the target VCPU, whether a predetermined period of time has elapsed after the patches become effective, and if the predetermined period of time has elapsed after the patches become effective, determining that all the threads of all the VCPUs in the target VCPU group which share the code segment have been scheduled at least once; wherein the predetermined period of time is longer than a task starvation time of the system, or, whether a thread with a lowest priority of all the target VCPUs in the target VCPU group which share the code segment has been scheduled, and if the thread with a lowest priority of all the target VCPUs in the target VCPU group which share the code segment has been scheduled, determining that all the threads of all the target VCPUs in the target VCPU group which share the code segment have been scheduled at least once;
modifying (S703), by the target VCPU, the second instruction of the original function to be patched into a no-operation instruction, modifying the first instruction of the original function to be patched into an instruction of unconditional jump to the new patch function, and modifying a return address of the exception handling into an address of the new patch function, if all the threads of all the target VCPUs in the target VCPU group which share the code segment have been scheduled at least once; modifying (S704) the return address of the exception handling into the address of the new patch function, if not all the threads of all the target VCPUs in the target VCPU group which share the code segment have been scheduled at least once.

4. A patching device of a management VCPU in a multi-core environment, **characterized in that**, the patching device is applied in a multi-core AMP system, patching device comprises:
a non-maskable interrupt sending unit (201), configured to send an inter-core non-maskable interrupt to each target Virtual Central Processing Unit, called hereinafter VCPU, in a target VCPU group which share a code segment;
a patch synchronization state monitoring unit (202), configured to monitor a patch synchronization state of said each target VCPU in the target VCPU group;
a patch activation unit (203), configured to modify a first instruction of an original function to be patched of said each target VCPU into an abnormal instruction for involving the original function to be patched in an exception handling process, after all the target VCPUs have entered the patch synchronization state; and
a patch synchronization end notification unit (204), configured to output a patch synchronization state end notification to all the target VCPUs, after the patch activation unit has modified the first instructions of all original functions to be patched.

5. The device according to claim 4, further comprising:
a storage unit (205), configured to save information of all the original functions to be patched of the target VCPUs, wherein the information of the original function to be patched is represented by a data structure MCPAT_FUNC_NODE, and includes: a function address, a first/second instruction value of the original function to be patched, the number of the target VCPUs, a current system TICK value, and VCPU state identification initialization; wherein
the patch activation unit (203) is specifically configured to modify first instructions of all the original functions to be patched into abnormal instructions according to the information of all the original functions to be patched acquired from the storage unit after all the target VCPUs have entered the patch synchronization state.

6. A patching device of a target VCPU in a multi-core environment, **characterized in that**, the patching device is applied in a multi-core AMP system, patching device comprises:
a non-maskable interrupt response unit (301), configured to disable an interrupt of a corresponding target Virtual Central Processing Unit, called hereinafter VCPU, in a target VCPU group which shares a code segment according to a received inter-core non-maskable interrupt, and output a notification that the corresponding target VCPU has entered a patch synchronization state;
a patch effective unit (302), configured to refresh an instruction cache of the corresponding target VCPU to make patches effective, and enable the interrupt of the corresponding target VCPU in the target VCPU group, after obtaining a patch synchronization state end notification; and
a scheduling judgment unit (401), configured to judge whether all threads of all the target VCPUs in the target VCPU group which share the code segment have been scheduled at least once; wherein the scheduling judgment unit (401) is a first scheduling judgment unit configured to judge whether a predetermined period of time has elapsed after the patches become effective, and if the predetermined period of time has elapsed after the patches become effective, determine that all the threads of all the target VCPUs in the target VCPU group which share the code segment have been scheduled at least once or the scheduling judgment unit (401) is a second scheduling judgment unit configured to judge whether a thread with the lowest priority of all the target VCPUs in the target VCPU group which share the code segment has been scheduled, and if the thread with a lowest priority of all the target VCPUs in the target VCPU group which share the code segment has been scheduled, determine that all the threads of all the target VCPUs in the target VCPU group which share the code segment have been scheduled at least once; and
a new patch function effective unit (402), configured to modify a second instruction of the original function to be patched into a no-operation instruction, modify a first instruction of the original function to be patched into an instruction of unconditional jump to the new patch function, and modify a return address of exception handling into an address of the new patch function, if all threads of all the target VCPUs in the target VCPU group which share the code segment have been scheduled at least once; or configured to modify the return address of exception handling into the address of the new patch function if not all threads of all the target VCPUs in the target VCPU group which share the code segment have been scheduled at least once.

7. A multi-core Asymmetrical Multi-Processing, called hereinafter AMP, system, comprising:
a multi-core processor hardware platform, including a management VCPU and multiple target VCPUs which share a code segment;
an operating system layer, which is above the multi-core processor hardware platform, wherein an individual operating system runs on said each VCPU; and
an application (APP) layer, which is above the operating system layer, wherein the patching device of the management VCPU according to any one of claims 4 to 5 is corresponding to the APP layer of the management VCPU; and, the patching device of the target VCPUs according to any one of claims 6 is corresponding to the APP layers of the target VCPUs.

8. A computer program product, comprising computer program code, which, when executed by a computer unit, will cause the computer unit to perform the method according to any one of claims 1 to 3.

## Patentansprüche

1. Patching-Verfahren in einer Mehrkern-Umgebung, **dadurch gekennzeichnet, dass** das Verfahren in einem Mehrkern-System mit asymmetrischer Mehrfachverarbeitung, im Folgenden AMP, angewandt wird, wobei das Verfahren Folgendes umfasst:
Senden (S501) einer nicht maskierbaren Unterbrechung zwischen Kernen durch eine im Folgenden als VCPU bezeichnete virtuelle Zentralverarbeitungseinheit der Verwaltung zu jeder Ziel-VCPU in einer Ziel-VCPU-Gruppe, die sich ein Codesegment teilt, so dass jede Ziel-VCPU in einen Patch-Synchronisationszustand eintritt, als Reaktion auf die nicht maskierbare Unterbrechung zwischen Kernen; und Überwachen (S502) des Patch-Synchronisationszustands jeder Ziel-VCPU durch die Verwaltungs-VCPU, und nachdem alle Ziel-VCPU in den Patch-Synchronisationszustand eingetreten sind, Modifizieren einer ersten Anweisung einer ursprünglichen zu patchenden Funktion jeder Ziel-VCPU zu einer abnormen Anweisung zum Beteiligen der zu patchenden ursprünglichen Funktion an einem Programmfehler-Abwicklungsprozess und Ausgeben einer Patch-Synchronisationszustands-Endebenachrichtigung an alle Ziel-VCPU, Beurteilen (S702) durch die Ziel-VCPU, ob ein vorbestimmter Zeitraum vergangen ist, nachdem die Patches effektiv werden, und wenn der vorbestimmte Zeitraum vergangen ist, nachdem die Patches effektiv werden, Bestimmen, dass alle Threads aller VCPU in der Ziel-VCPU-Gruppe, die sich das Codesegment teilen, mindestens einmal eingeteilt wurden, wobei der vorbestimmte Zeitraum größer als eine Task-Hungerzeit des Systems ist, oder ob ein Thread mit einer niedrigsten Priorität aller Ziel-VCPU in der Ziel-VCPU-Gruppe, die sich das Codesegment teilen, eingeteilt wurde, und wenn der Thread mit einer niedrigsten Priorität aller Ziel-VCPU in der Ziel-VCPU-Gruppe, die sich das Codesegment teilen, eingeteilt wurde, Bestimmen, dass alle Threads aller Ziel-VCPU in der Ziel-VCPU-Gruppe, die sich das Codesegment teilen, mindestens einmal eingeteilt wurden; Modifizieren (S703) der zweiten Anweisung der zu patchenden ursprünglichen Funktion zu einer Keine-Operation-Anweisung, Modifizieren der ersten Anweisung der zu patchenden ursprünglichen Funktion zu einer Anweisung eines unbedingten Sprungs zu der neuen Patch-Funktion, wenn alle Threads aller Ziel-VCPU in der Ziel-VCPU-Gruppe, die sich das Codesegment teilen, mindestens einmal eingeteilt wurden; Modifizieren (S704) der Rückkehradresse der Programmfehlerabwicklung zu einer Adresse der neuen Patch-Funktion, wenn nicht alle Threads aller Ziel-VCPU in der Ziel-VCPU-Gruppe, die sich das Codesegment teilen, mindestens einmal in dem Programmfehlerabwicklungsprozess eingeteilt wurden, der getriggert wird, wenn die zu patchende ursprüngliche Funktion zu der abnormen Anweisung ausgeführt wird.

2. Verfahren nach Anspruch 1, ferner umfassend:
Abspeichern von Informationen der zu patchenden ursprünglichen Funktion der besagten jeden Ziel-VCPU in einem gemeinsam benutzten Speicher durch die Verwaltungs-VCPU, wobei die Informationen der zu patchenden ursprünglichen Funktion durch eine Datenstruktur MCPAT_FUNC_NODE dargestellt werden und Folgendes umfassen: eine Funktionsadresse, einen ersten/zweiten Anweisungswert der zu patchenden ursprünglichen Funktion, die Anzahl der Ziel-VCPU, einen aktuellen System-TICK-Wert und VCPU-Zustandsidentifikations-Initialisierung; wobei
das Modifizieren der ersten Anweisung der zu patchenden ursprünglichen Funktion der Ziel-VCPU zu der abnormen Anweisung Folgendes umfasst:
Modifizieren der ersten Anweisung der zu patchenden ursprünglichen Funktion der Ziel-VCPU zu der abnormen Anweisung gemäß den aus dem gemeinsam benutzten Speicher beschafften Informationen der zu patchenden ursprünglichen Funktion der Ziel-VCPU.

3. Patching-Verfahren in einer Mehrkern-Umgebung, **dadurch gekennzeichnet, dass** das Verfahren in einem Mehrkern-AMP-System angewandt wird, wobei das Verfahren die folgenden Schritte umfasst:
eine Ziel-VCPU sperrt (S601) eine Unterbrechung einer entsprechenden Ziel-VCPU in einer Ziel-VCPU-Gruppe, die sich ein Codesegment teilt, gemäß einer empfangenen nicht maskierbaren Unterbrechung zwischen Kernen und es wird eine Benachrichtigung ausgegeben, dass die entsprechende Ziel-VCPU in einen Patch-Synchronisationszustand eingetreten ist;
die Ziel-VCPU frischt einen Anweisungs-Cache der entsprechenden Ziel-VCPU auf (S602), um Patches effektiv zu machen, und die Unterbrechung der entsprechenden Ziel-VCPU in der Ziel-VCPU-Gruppe wird nach dem Erhalten einer Patch-Synchronisationszustands-Endebenachrichtigung freigegeben; und
die Ziel-VCPU beurteilt (S702), ob ein vorbestimmter Zeitraum vergangen ist, nachdem die Patches effektiv werden, und wenn der vorbestimmte Zeitraum vergangen ist, nachdem die Patches effektiv werden, wird bestimmt, dass alle Threads aller VCPU in der Ziel-VCPU-Gruppe, die sich das Codesegment teilen, mindestens einmal eingeteilt wurden; wobei der vorbestimmte Zeitraum länger als eine Task-Hungerzeit des Systems ist, oder ob ein Thread mit einer niedrigsten Priorität aller Ziel-VCPU in der Ziel-VCPU-Gruppe, die sich das Codesegment teilen, eingeteilt wurde, und wenn der Thread mit einer niedrigsten Priorität aller Ziel-VCPU in der Ziel-VCPU-Gruppe, die sich das Codesegment teilen, eingeteilt wurde, wird bestimmt, dass alle Threads aller Ziel-VCPU in der Ziel-VCPU-Gruppe, die sich das Codesegment teilen, mindestens einmal eingeteilt wurden;
die Ziel-VCPU modifiziert (S703) die zweite Anweisung der zu patchenden ursprünglichen Funktion zu einer Keine-Operation-Anweisung, die erste Anweisung der zu patchenden ursprünglichen Funktion wird zu einer Anweisung des unbedingten Sprungs zu der neuen Patch-Funktion modifiziert und eine Rückkehradresse der Programmfehlerabwicklung wird zu einer Adresse der neuen Patch-Funktion modifiziert, wenn alle Threads aller Ziel-VCPU in der Ziel-VCPU-Gruppe, die sich das Codesegment teilen, mindestens einmal eingeteilt wurden; und
die Rückkehradresse der Programmfehlerabwicklung wird zu der Adresse der neuen Patch-Funktion modifiziert (S704), wenn nicht alle Threads aller Ziel-VCPU in der Ziel-VCPU-Gruppe, die sich das Codesegment teilen, mindestens einmal eingeteilt wurden.

4. Patching-Vorrichtung einer Verwaltungs-VCPU in einer Mehrkern-Umgebung, **dadurch gekennzeichnet, dass** die Patching-Vorrichtung in einem Mehrkern-AMP-System angewandt wird, wobei die Patching-Vorrichtung Folgendes umfasst:
eine Einheit (201) zum Senden von nicht maskierbaren Unterbrechungen, ausgelegt zum Senden einer nicht maskierbaren Unterbrechung zwischen Kernen zu jeder virtuellen Ziel-Zentralverarbeitungseinheit der Verwaltung, im Folgenden als Ziel-VCPU bezeichnet, in einer Ziel-VCPU-Gruppe, die sich ein Codesegment teilt;
eine Patch-Synchronisationszustands-Überwachungseinheit (202), ausgelegt zum Überwachen eines Patch-Synchronisationszustands jeder Ziel-VCPU in der Ziel-VCPU-Gruppe;
eine Patch-Aktivierungseinheit (203), ausgelegt zum Modifizieren einer ersten Anweisung einer zu patchenden ursprünglichen Funktion jeder besagten Ziel-VCPU zu einer abnormen Anweisung zum Beteiligen der zu patchenden ursprünglichen Funktion an einem Programmfehlerabwicklungsprozess, nachdem alle Ziel-VCPU in den Patch-Synchronisationszustand eingetreten sind; und
eine Patch-Synchronisationsende-Benachrichtigungseinheit (204), ausgelegt zum Ausgeben einer Patch-Synchronisationszustands-Endebenachrichtigung an alle Ziel-VCPU, nachdem die Patch-Aktivierungseinheit die ersten Anweisungen aller zu patchenden ursprünglichen Funktionen modifiziert hat.

5. Vorrichtung nach Anspruch 4, ferner umfassend:
eine Speichereinheit (205), ausgelegt zum Abspeichern von Informationen aller zu patchenden ursprünglichen Funktionen der Ziel-VCPU, wobei die Informationen der zu patchenden ursprünglichen Funktion durch eine Datenstruktur MCPAT_FUNC_NODE dargestellt werden und Folgendes umfassen: eine Funktionsadresse, einen ersten/zweiten Anweisungswert der zu patchenden ursprünglichen Funktion, die Anzahl der Ziel-VCPU, einen aktuellen System-TICK-Wert und VCPU-Zustandsidentifikations-Initialisierung; wobei die Patch-Aktivierungseinheit (203) spezifisch ausgelegt ist zum Modifizieren von ersten Anweisungen aller zu patchenden ursprünglichen Funktionen zu abnormen Anweisungen gemäß den Informationen aller zu patchenden ursprünglichen Funktionen, die aus der Speichereinheit beschafft werden, nachdem alle Ziel-VCPU in den Patch-Synchronisationszustand eingetreten sind.

6. Patching-Vorrichtung einer Ziel-VCPU in einer Mehrkern-Umgebung, **dadurch gekennzeichnet, dass** die Patching-Vorrichtung in einem Mehrkern-AMP-System angewandt wird, wobei die Patching-Vorrichtung Folgendes umfasst:
eine Antworteinheit (301) nicht maskierbarer Unterbrechung, ausgelegt zum Sperren einer Unterbrechung einer entsprechenden virtuellen Ziel-Zentralverarbeitungseinheit der Verwaltung, im Folgenden als Ziel-VCPU bezeichnet, in einer Ziel-VCPU-Gruppe, die sich ein Codesegment teilt, gemäß einer empfangenen nicht maskierbaren Unterbrechung zwischen Kernen und Ausgeben einer Benachrichtigung, dass die entsprechende Ziel-VCPU in einen Patch-Synchronisationszustand eingetreten ist;
eine Patch-Effektiv-Einheit (302), ausgelegt zum Auffrischen eines Anweisungs-Cache der entsprechenden Ziel-VCPU, um Patches effektiv zu machen, und Freigeben der Unterbrechung der entsprechenden Ziel-VCPU in der Ziel-VCPU-Gruppe, nachdem eine Patch-Synchronisationszustands-Endebenachrichtigung erhalten wird; und
eine Einteilungsbeurteilungseinheit (401), ausgelegt zum Beurteilen, ob alle Threads aller Ziel-VCPU in der Ziel-VCPU-Gruppe, die sich das Codesegment teilen, mindestens einmal eingeteilt wurden; wobei die Einteilungsbeurteilungseinheit (401) eine erste Einteilungsbeurteilungseinheit ist, ausgelegt zum Beurteilen, ob ein vorbestimmter Zeitraum vergangen ist, nachdem die Patches effektiv werden, und wenn der vorbestimmte Zeitraum vergangen ist, nachdem die Patches effektiv werden, Bestimmen, dass alle Threads aller Ziel-VCPU in der Ziel-VCPU-Gruppe, die sich das Codesegment teilen, mindestens einmal eingeteilt wurden, oder die Einteilungsbeurteilungseinheit (401) eine zweite Einteilungsbeurteilungseinheit ist, ausgelegt zum Beurteilen, ob ein Thread mit der niedrigsten Priorität aller Ziel-VCPU in der Ziel-VCPU-Gruppe, die sich das Codesegment teilen, eingeteilt wurde, und wenn der Thread mit einer niedrigsten Priorität aller Ziel-VCPU in der Ziel-VCPU-Gruppe, die sich das Codesegment teilen, eingeteilt wurde, Bestimmen, dass alle Threads aller Ziel-VCPU in der Ziel-VCPU-Gruppe, die sich das Codesegment teilen, mindestens einmal eingeteilt wurden; und
eine neue Patch-Funktion-Effektiv-Einheit (402), ausgelegt zum Modifizieren einer zweiten Anweisung der zu patchenden ursprünglichen Funktion zu einer Keine-Operation-Anweisung, Modifizieren einer ersten Anweisung der zu patchenden ursprünglichen Funktion zu einer Anweisung des unbedingten Sprungs zu der neuen Patch-Funktion und Modifizieren einer Rückkehradresse der Programmfehlerabwicklung zu einer Adresse der neuen Patch-Funktion, wenn alle Threads aller Ziel-VCPU in der Ziel-VCPU-Gruppe, die sich das Codesegment teilen, mindestens einmal eingeteilt wurden; oder ausgelegt ist zum Modifizieren der Rückkehradresse der Programmfehlerabwicklung zu der Adresse der neuen Patch-Funktion, wenn nicht alle Threads aller Ziel-VCPU in der Ziel-VCPU-Gruppe, die sich das Codesegment teilen, mindestens einmal eingeteilt wurden.

7. System zur asymmetrischen Mehrfachverarbeitung, im Folgenden als AMP bezeichnet, mit mehreren Kernen, umfassend:
eine Mehrkern-Prozessorhardwareplattform, die eine Verwaltungs-VCPU und mehrere Ziel-VCPU, die sich ein Codesegment teilen, umfasst;
eine Betriebssystemschicht, die über der Mehrkern-Prozessorhardware-Plattform liegt, wobei auf jeder besagten VCPU ein einzelnes Betriebssystem läuft; und
eine Anwendungs-Schicht, APP-Schicht, die über der Betriebssystemschicht liegt, wobei die Patching-Vorrichtung der Verwaltungs-VCPU nach einem der Ansprüche 4 bis 5 der APP-Schicht der Verwaltungs-VCPU entspricht; und die Patching-Vorrichtung der Ziel-VCPU nach Anspruch 6 den APP-Schichten der Ziel-VCPU entspricht.

8. Computerprogrammprodukt, das Computerprogrammcode umfasst, der, wenn er durch eine Computereinheit ausgeführt wird, bewirkt, dass die Computereinheit das Verfahren nach einem der Ansprüche 1 bis 3 ausführt.

## Revendications

1. Procédé de correction de programme dans un environnement multicoeur, **caractérisé en ce que** le procédé est appliqué dans un système de multitraitement asymétrique multicoeur, AMP, le procédé comprenant les étapes suivantes :
envoyer (S501), par une unité de traitement centrale virtuelle de gestion, appelée ci-après VCPU, une interruption non masquable inter-coeur à chaque unité de traitement centrale virtuelle cible dans un groupe de VCPU cibles qui partagent un segment de code de manière à ce que chaque dite VCPU cible entre dans un état de synchronisation de correction de programme, en réponse à l'interruption non masquable inter-coeur ; et
surveiller (S502), par la VCPU de gestion, l'état de synchronisation de correction de programme de chaque dite VCPU cible, et, après que toutes les VCPU cibles sont entrées dans l'état de synchronisation de correction de programme, modifier une première instruction d'une fonction originale à corriger de chaque dite VCPU cible en une instruction exceptionnelle pour entraîner que la fonction originale soit corrigée dans un processus de gestion d'exception, et délivrer en sortie une notification de fin d'état de synchronisation de correction de programme à toutes les VCPU cibles, juger (S702), par la VCPU cible, si une période de temps prédéterminée s'est écoulée ou non après que les corrections de programme sont devenues effectives, et si la période de temps prédeterminée s'est écoulée après que les corrections de programme sont devenues effectives, déterminer que tous les fils de toutes les VCPU dans le groupe de VCPU cibles qui partagent le segment de code ont été planifiés au moins une fois, où la période de temps prédéterminée est plus longue qu'un temps d'insuffisance de ressources de tâche du système ou, si un fil avec la priorité la plus basse de toutes les VCPU cibles dans le groupe de VCPU cibles qui partagent le segment de code a été planifié, et si le fil avec la priorité la plus basse de toutes les VCPU cibles dans le groupe de VCPU cibles qui partagent le segment de code a été planifié, déterminer que tous les fils de toutes les VCPU cibles dans le groupe de VCPU cibles qui partagent le segment de code ont été planifiés au moins une fois ; modifier (S703), par la VCPU cible, la seconde instruction de la fonction originale à corriger en une instruction non opérationnelle, modifier la première instruction de la fonction originale à corriger en une instruction de saut inconditionnel vers la nouvelle fonction de correction de programme, si tous les fils de toutes les VCPU cibles dans le groupe de VCPU cibles qui partagent le segment de code ont été planifiés au moins une fois ; modifier (S704) l'adresse de retour de la gestion d'exception en une adresse de la nouvelle fonction de correction de programme, si les fils de toutes les VCPU cibles dans le groupe de VCPU cibles qui partagent le segment de code n'ont pas tous été planifiés au moins une fois dans le processus de gestion d'exception, qui est déclenché lorsque la fonction originale à corriger est exécutée comme l'instruction exceptionnelle.

2. Procédé selon la revendication 1, comprenant en outre l'étape suivante :
sauvegarder, par la VCPU de gestion, des informations de la fonction originale à corriger de chaque dite VCPU cible dans une mémoire partagée, où les informations de la fonction originale à corriger sont représentées par une structure de données MCPAT_FUNC_NODE, et comprennent : une adresse de fonction, une valeur de première/seconde instruction de la fonction originale à corriger, le nombre des VCPU cibles, une valeur TICK du système en cours et une initialisation d'identification d'état VCPU ; où
la modification de la première instruction de la fonction originale à corriger de la VCPU cible en une instruction exceptionnelle comprend l'étape suivante :
modifier la première instruction de la fonction originale à corriger de la VCPU cible en l'instruction exceptionnelle suivant les informations de la fonction originale à corriger de la VCPU cible acquises depuis la mémoire partagée.

3. Procédé de correction de programme dans un environnement multicoeur, **caractérisé en ce que** le procédé est appliqué dans un système AMP multicoeur, le procédé comprenant les étapes suivantes :
désactiver (S601), par une unité de traitement centrale virtuelle cible, appelée ci-après VCPU, une interruption d'une unité de traitement centrale virtuelle cible correspondante dans un groupe de VCPU cibles qui partagent un segment de code conformément à une interruption non masquable inter-coeur reçue, et délivrer en sortie une notification que la VCPU cible correspondante est entrée dans un état de synchronisation de correction de programme ;
rafraîchir (S602), par la VCPU cible, un cache d'instructions de la VCPU cible correspondante pour rendre effective les corrections de programme, et activer l'interruption de la VCPU cible correspondante dans le groupe de VCPU cibles, après obtention d'une notification de fin d'état de synchronisation de correction de programme ; et
juger (S702), par la VCPU cible, si une période de temps prédéterminée s'est écoulée ou non après que les corrections de programme sont devenues effectives et, si la période de temps prédéterminée s'est écoulée après que les corrections de programme sont devenues effectives, déterminer que tous les fils de toutes les VCPU dans le groupe de VCPU cibles qui partagent le segment de code ont été planifiés au moins une fois ; où la période de temps prédéterminée est plus longue qu'un temps d'insuffisance de ressources de tâche du système, ou, si un fil avec la priorité la plus basse de toutes les VCPU cibles dans le groupe de VCPU cibles qui partagent le segment de code a été planifié, et si le fil avec la priorité la plus basse de toutes les VCPU cibles dans le groupe de VCPU cibles qui partagent le segment de code a été planifié, déterminer que tous les fils de toutes les VCPU cibles dans le groupe de VCPU cibles qui partagent le segment de code ont été planifiés au moins une fois ;
modifier (S703), par la VCPU cible, la seconde instruction de la fonction originale à corriger en une instruction non opérationnelle, modifier la première instruction de la fonction originale à corriger en une instruction de saut inconditionnel vers la nouvelle fonction de correction de programme, et modifier une adresse de retour de la gestion d'exception en une adresse de la nouvelle fonction de correction de programme, si l'ensemble des fils de toutes les VCPU cibles dans le groupe de VCPU cibles qui partagent le segment de code ont été planifiés au moins une fois ; modifier (S704) l'adresse de retour de la gestion d'exception en l'adresse de la nouvelle fonction de correction de programme, si les fils de toutes les VCPU cibles dans le groupe de VCPU cibles qui partagent le segment de code n'ont pas tous été planifiés au moins une fois.

4. Dispositif de correction de programme d'une VCPU de gestion dans un environnement multicoeur, **caractérisé en ce que** le dispositif de correction de programme est appliqué dans un système AMP multicoeur, le dispositif de correction de programme comprenant :
une unité d'envoi d'interruption non masquable (201) configurée pour envoyer une interruption non masquable inter-coeur à chaque unité de traitement centrale virtuelle cible, appelée ci-après VCPU, dans un groupe de VCPU cibles qui partagent un segment de code ;
une unité de surveillance d'état de synchronisation de correction de programme (202), configurée pour surveiller un état de synchronisation de correction de programme de chaque dite VCPU cible dans le groupe de VCPU cibles ;
une unité d'activation de correction de programme (203), configurée pour modifier une première instruction d'une fonction originale devant être corrigée de chaque dite VCPU cible en une instruction exceptionnelle pour entraîner que la fonction originale soit corrigée dans un processus de gestion d'exception, après que toutes les VCPU cibles sont entrées dans l'état de synchronisation de correction de programme ; et
une unité de notification de fin de synchronisation de correction de programme (204), configurée pour délivrer en sortie une notification de fin d'état de synchronisation de correction de programme à toutes les VCPU cibles, après que l'unité d'activation de correction de programme a modifié les premières instructions de toutes les fonctions originales devant être corrigées.

5. Dispositif selon la revendication 4, comprenant en outre :
une unité de stockage (205), configurée pour sauvegarder des informations de toutes les fonctions originales devant être corrigées des VCPU cibles, où les informations de la fonction originale devant être corrigée sont représentées par une structure de données MCPAT_FUNC_NODE et comprennent : une adresse de fonction, une valeur de première/seconde instruction de la fonction originale devant être corrigée,
le nombre des VCPU cibles, une valeur TICK du système en cours et une initialisation d'identification d'état VCPU ; où
l'unité d'activation de correction de programme (203) est spécifiquement configurée pour modifier des premières instructions de toutes les fonctions originales devant être corrigées en instructions exceptionnelles suivant les informations de toutes les fonctions originales à corriger acquises auprès de l'unité de stockage après que toutes les VCPU cibles sont entrées dans l'état de synchronisation de correction de programme.

6. Dispositif de correction de programme d'une VCPU cible dans un environnement multicoeur, **caractérisé en ce que** le dispositif de correction de programme est appliqué dans un système AMP multicoeur, le dispositif de correction de programme comprenant :
une unité de réponse d'interruption non-masquable (301), configurée pour désactiver une interruption d'une unité de traitement centrale virtuelle cible correspondante,
appelée ci-après VCPU, dans un groupe de VCPU cibles qui partagent un segment de code conformément à une interruption non masquable inter-coeur reçue, et délivrer en sortie une notification selon laquelle la VCPU cible correspondante est entrée dans un état de synchronisation de correction de programme ;
une unité de correction de programme effective (302), configurée pour rafraîchir un cache d'instruction de la VCPU cible correspondante pour rendre les corrections de programme effectives, et activer l'interruption de la VCPU cible correspondante dans le groupe de VCPU cibles, après obtention d'une notification de fin d'état de synchronisation de correction de programme ; et
une unité de jugement de planification (401), configurée pour juger si tous les fils de toutes les VCPU cibles dans le groupe de VCPU cibles qui partagent le segment de code ont été planifiés au moins une fois ; où l'unité de jugement de planification (401) est une première unité de jugement de planification configurée pour juger si une période de temps prédéterminée s'est écoulée après que les corrections de programme sont devenues effectives, et si la période de temps prédéterminée s'est écoulée après que les corrections de programme sont devenues effectives, déterminer que tous les fils de toutes les VCPU cibles dans le groupe de VCPU cibles qui partagent le segment de code ont été planifiés au moins une fois, ou l'unité de jugement de planification (401) est une seconde unité de jugement de planification configurée pour juger si un fil avec la priorité la plus basse de toutes les VCPU cibles dans le groupe de VCPU cibles qui partagent le segment de code a été planifié, et si le fil avec la priorité la plus basse de toutes les VCPU cibles dans le groupe de VCPU cibles qui partagent le segment de code a été planifié, déterminer que tous les fils de toutes les VCPU cibles dans le groupe de VCPU cibles qui partagent le segment de code ont été planifiés au moins une fois ; et
une unité de nouvelle fonction de correction de programme effective (402), configurée pour modifier une seconde instruction de la fonction originale devant être corrigée en une instruction non opérationnelle, modifier une première instruction de la fonction originale devant être corrigée en une instruction de saut inconditionnel vers la nouvelle fonction de correction de programme, et modifier une adresse de retour de la gestion d'exception en une adresse de la nouvelle fonction de correction de programme, si tous les fils de toutes les VCPU cibles dans le groupe de VCPU cibles qui partagent le segment de code ont été planifiés au moins une fois ; ou configurée pour modifier l'adresse de retour d'une gestion d'exception en l'adresse de la nouvelle fonction de correction de programme si les fils de toutes les VCPU cibles dans le groupe de VCPU cibles qui partagent le segment de code n'ont pas tous été planifiés au moins une fois.

7. Système de multitraitement asymétrique multicoeur, appelé ci-après système AMP, comprenant :
une plate-forme matérielle à processeur multicoeur, comprenant une VCPU de gestion et plusieurs VCPU cibles qui partagent un segment de code ;
une couche de système d'exploitation, qui est au-dessus de la plate-forme matérielle à processeur multicoeur, où un système d'exploitation individuel est exécuté sur chaque dite VCPU ; et
une couche d'application (APP), qui est au-dessus de la couche de système d'exploitation, où le dispositif de correction de programme de la VCPU de gestion suivant l'une quelconque des revendications 4 à 5 correspond à la couche APP de la VCPU de gestion ; et le dispositif de correction de programme des VCPU cibles suivant la revendication 6 correspond aux couches APP des VCPU cibles.

8. Produit programme informatique, comprenant du code de programme informatique, qui, lorsqu'il est exécuté sur une unité informatique, entraînera l'unité informatique à exécuter le procédé selon l'une quelconque des revendications 1 à 3.
